# EUROPEAN PATENT SPECIFICATION

(11) **EP 2 925 952 B1**
(45) Date of publication and mention of the grant of the patent: **01.01.2020**
(21) Application number: 13857845.5
(22) Date of filing: 29.11.2013
(51) Int. Cl.: E21B 21/06, E21B 43/00

(54) **VAPOR DISPLACEMENT METHOD FOR HYDROCARBON REMOVAL AND RECOVERY FROM DRILL CUTTINGS**
DAMPFVERDRÄNGUNGSVERFAHREN ZUR KOHLENWASSERSTOFFENTFERNUNG UND -RÜCKGEWINNUNG AUS BOHRKLEIN
MÉTHODE DE DÉPLACEMENT DE VAPEUR POUR LE RETRAIT ET LA RÉCUPÉRATION D'HYDROCARBURES DE DÉBLAIS DE FORAGE

(30) Priority: 29.11.2012 US 201261731338 P; 29.11.2012 US 201261731319 P
(43) Date of publication of application: 07.10.2015
(73) Proprietor: M-I LLC, Houston, TX 77072 (US); M-I Drilling Fluids UK Limited, Aberdeen AB10 1UD (GB); Schlumberger Canada Limited, Calgary AB T2G 0P6 (CA)
(72) Inventor: AHUJA, Mandeep, Houston, TX 77082 (US); NEWMAN, Paul, Dartmouth, NS B3B 1R9 (CA); SMITH, Amber, Aberdeen AB12 3AD (GB); BINGHAM, Richard, Katy, TX 77450 (US)
(74) Representative: Schlumberger Intellectual Property Department
(86) International application number: PCT/US2013/072490
(87) International publication number: WO 2014/085766

(56) References cited:
- WO-A1-91/08375
- WO-A2-2011/044260
- US-A- 4 434 028
- US-A- 4 836 302
- US-A1- 2005 257 809
- US-B2- 7 128 169

## Description

### BACKGROUND

Removing contaminants from materials is an important aspect of many industries. For example, solid materials can become contaminated with a liquid contaminate that can be difficult to remove. Removing liquid contaminates from a solid material in a cost-effective and environmentally friendly manner can be advantageous.

In the oilfield industry, for example, "drilling mud" is pumped from the well drilling platform, through the drill string, and to a drill bit supported at the lower or distal end of the drill string. The drilling mud lubricates the drill bit and carries away "drill cuttings" generated by the drill bit engaging the Earth formation as the drill bit digs deeper. The drill cuttings are carried in a return flow stream of drilling mud through the well annulus and back to the well drilling platform at the earth's surface. The drilling mud that reached the platform has been contaminated with small pieces of shale and rock that are known in the industry as well cuttings or drill cuttings. Once the drill cuttings, drilling mud, and other waste reach the platform, a "shale shaker" is typically used to remove the drilling mud from the drill cuttings so that the drilling mud may be reused.

The disposal of the drill cuttings and drilling mud is a complex environmental problem. Drill cuttings contain not only the residual drilling mud product that may contaminate the surrounding environment, but may also contain oil and other waste that is particularly hazardous to the environment, especially when drilling in a marine environment.

In addition to shakers, various methods for removing hydrocarbons and contaminants from drill cuttings and drilling fluids have been employed. However, the high costs and plant construction complexity, energy waste, limited safety, especially when operating off-shore, and low efficiency have rendered such methods disadvantageous for extraction of hydrocarbons from drill cuttings.

WO 2011/044260 and US 7128169, which disclose a method according to the preamble of claim 1, can be regarded as useful for understanding the invention.

Despite many valuable contributions from the art, it would be beneficial to develop improved methods for extracting hydrocarbons from drill cuttings.

Accordingly, the invention provides for a method according to claim 1. In particular the method in accordance with the invention comprises: conveying drill cuttings into a vessel, solubilizing hydrocarbons from the drill cuttings with a liquid solvent to form a miscible fluid and using using vapor to displace the miscible fluid from the vessel.

### BRIEF DESCRIPTION OF DRAWINGS

FIG. 1 is an illustration of a plot of pressure versus temperature including the extraction temperature/pressure region for liquid carbon dioxide in accordance with embodiments disclosed herein.
FIG. 2 is a schematic illustration of a first system for separating hydrocarbons from drill cuttings in accordance with embodiments disclosed herein.
FIG. 3 is a schematic illustration of a second system for separating hydrocarbons from drill cuttings in accordance with embodiments disclosed herein.
FIG. 4 is a graphical illustration of average oil content of cuttings for various flow rates in accordance with embodiments disclosed herein.
FIG. 5 is a graphical illustration of average oil content of cuttings throughout a cuttings bed for various flow rates in accordance with embodiments disclosed herein.
FIG. 6 is a graphical illustration comparing liquid carbon dioxide displacement against nitrogen vapor displacement in accordance with embodiments disclosed herein.
FIG. 7 is a graphical illustration comparing vapor carbon dioxide displacement against nitrogen vapor displacement in accordance with embodiments disclosed herein.
FIG. 8 is a schematic illustration of an extraction tank in accordance with embodiments disclosed herein.
FIG. 9 is a schematic illustration of a third system for separating hydrocarbons from drill cuttings in accordance with embodiments disclosed herein.

### DETAILED DESCRIPTION

Embodiments disclosed herein relate generally to systems and methods for removing a contaminant from a solid particulate. While the present disclosure describes the removal of hydrocarbons from drill cuttings, one of ordinary skill in the art will appreciate that the teachings are applicable to other applications.

The present invention can utilize a liquid solvent to solubilize the contaminant from the solid particulate and form a miscible fluid. Changes in temperature and pressure can cause the miscible fluid to vaporize and permit separation of the contaminant from the solvent. A non-limiting example provided in the disclosure is removing hydrocarbons from drill cuttings. In accordance with the invention, the efficiency of the separation/extraction process may be improved by using vapor to displace the miscible fluid. Advantageously, use of the vapor to displace the fluid does not limit the amount of hydrocarbons that are present in the displaced fluid. In other words, displacing the miscible fluid with additional solvent will limit the hydrocarbons present in the miscible fluid by the ability of the solvent to "carry" the hydrocarbons.

Environmental concerns related to disposal of hydrocarbon-contaminated drill cuttings demand increasingly efficient processes to separate the hydrocarbons from the cuttings. In an offshore drilling rig, if hydrocarbons can be effectively separated from the drill cuttings below a regulated threshold, such as less than one-percent by mass, then the drill cuttings may be conveyed into the offshore environment. Otherwise, drill cuttings may require costly transportation to shore that is costly. Separation of the hydrocarbons is also beneficial as those hydrocarbons can be reused.

The present invention can take advantage of the high solubility of hydrocarbons at relatively low temperatures and pressures. At such relatively low temperatures, the drill cuttings are not frozen, thereby allowing for favorable mass transfer (*i.e.,* the mixture of drill cuttings and liquid carbon dioxide is free flowing).

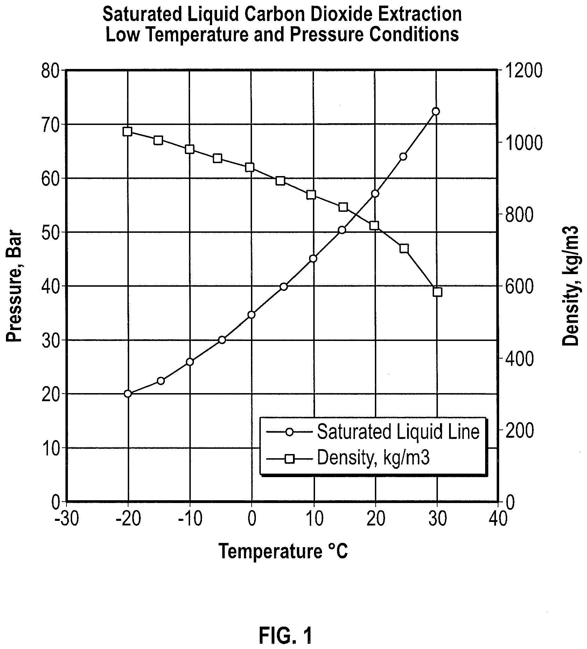

FIG. 1 shows a plot of pressure (bar) versus temperature (° C) including the extraction temperature/pressure region for liquid carbon dioxide. As shown, extraction of hydrocarbons from drill cuttings using saturated liquid carbon dioxide may be accomplished at temperatures in the range of about -20 °C to about 40 °C and saturation pressures in the range of about 20 bar to about 45 bar. In alternate embodiments, the pressures may be in the range of about 45 bar to about 65 bar, between about 65 bar and about 85 bar, or between about 85 bar and about 105 bar. Carbon dioxide at temperatures below the saturation point may thus be used to remove hydrocarbons from drill cuttings. The saturation temperature of carbon dioxide is the temperature for a corresponding saturation pressure at which a liquid carbon dioxide boils into its vapor phase. Carbon dioxide at its saturation temperature will be present in both its liquid and gaseous forms. Carbon dioxide below the saturation temperature and corresponding pressure will only be in liquid form.

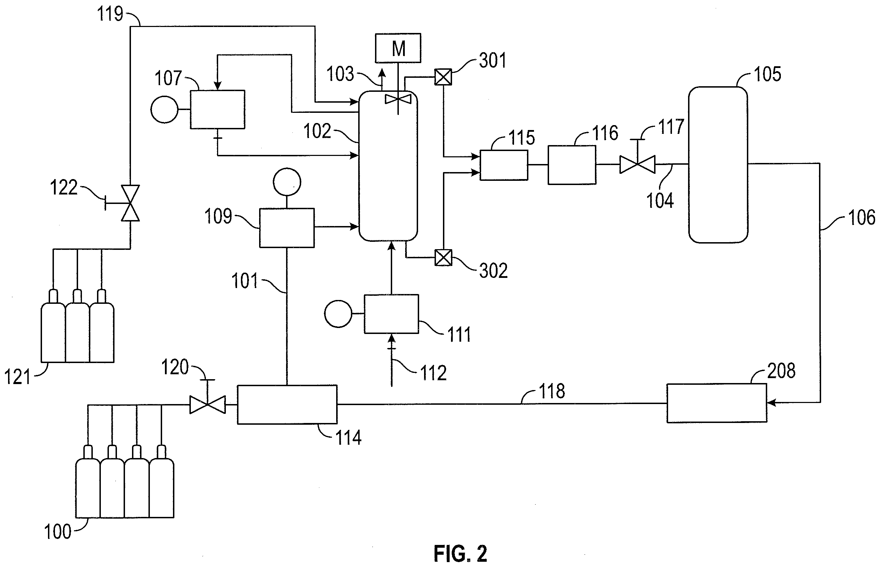

FIG. 2 shows a schematic illustration of a first system for extracting hydrocarbons from drill cuttings in accordance with embodiments disclosed herein. As shown, the system includes a solvent tank 100, which supplies liquid solvent to a vessel 102 via a transfer line 101. The solvent may be any substance capable of effectively solubilizing the contaminant from the solid particulate. In this example, the solvent can be any substance for solubilizing hydrocarbons from drill cuttings. In an embodiment, the solvent can be carbon dioxide, butane, propane or other substances capable of solubilizing hydrocarbons from drill cuttings as known to a person having ordinary skill in the art. For simplicity purposes, the present disclosure describes carbon dioxide as the solvent. Any references to carbon dioxide as used herein should not be deemed as limiting the invention to carbon dioxide.

The transfer line 101 may be connected near the bottom of the vessel 102. A valve 120 may be disposed on the solvent tank 100 to control the flow of liquid carbon dioxide to the vessel 102. A vapor tank 121 may supply pressurized vapor to the vessel 102 via a transfer line 119. In some embodiments, the transfer line 119 is connected near the top of the vessel 102. A valve 122 may be disposed on the tank 121 to control the flow of pressurized vapor to the vessel 102. While shown as a vapor tank 121, any container may supply any type of pressurized vapor to the vessel 102 capable of displacing the liquid solvent from the vessel 102. In certain embodiments, the pressurized vapor may be a fluid at its critical point, in the subcritical state or the supercritical state. In some embodiments, the pressurized vapor may be vapor carbon dioxide and may be supplied by the solvent tank 100.

Non-limiting examples of vapors that may be used comprise nitrogen, carbon dioxide, air and any inert gas which would displace liquid from the vessel 102. Storage tanks may be manufactured using high-strength, fine-grain carbon steel, stainless steel, and other metals, or alloys thereof, constructed and tested for specific operating pressures. Transfer line 101 may be any type of conduit capable of transferring liquid solvent to the vessel 102 such as, for example, stainless steel and ceramic-lined stainless steel conduits. Transfer line 119 may be any type of conduit capable of transferring pressurized vapor to the vessel 102 such as, for example, stainless steel and ceramic-lined stainless steel conduits. The vessel 102 may be fabricated from materials known in the art, such as, for example, stainless steel, or other types of metal, or alloys thereof.

In certain embodiments, the vessel 102 may include a vessel capable of withstanding pressures needed for solubilizing the contaminants and/or conveying the uncontaminated solid particulates out of the vessel 102. In one or more embodiments, the vessel 102 may include a vessel capable of withstanding various pressures, for example, 50, 60, 70, 80 bar or higher. The vessel 102 may also include a purge valve or a nozzle 103 to periodically relieve pressure to prevent structural damage. The vessel 102 may also include a mechanical agitator M that may be used to agitate the drill cuttings in the vessel 102. The mechanical agitator M may include a helical, paddle, blade or any equivalent design coupled to a motor that may rotate at a speed that provides agitation of the drill cuttings. Mechanical agitator M may be disposed in or on vessel 102, so as to allow mechanical agitator M to contact and move the drill cuttings, increasing the exposure of the drill cuttings to the liquid solvent. The vessel 102 may also include a recirculation pump 107 that may provide additional hydraulic mixing and fluidizing for enhanced rate of mass transfer in the vessel 102. Recirculation pump 107 may be used to recirculate the liquid solvent through the vessel 102, thereby increasing the saturation of the solvent with the hydrocarbons. Such a recirculation loop may thereby increase the efficiency of the system.

The dimensions of the vessel 102 may also be varied in order to increase the efficiency of hydrocarbon removal. For example, in one embodiment the length-to-diameter ratio of the vessel 102 may be about 2:1, while in other embodiments, the length-to-diameter ratio of the vessel 102 may be about 5:1. In still other embodiments, the length-to-diameter ratio of the vessel 102 may be about 3.7:1. Other ratios may be used without departing from the scope of the present disclosure. Additionally, depending on the location of the vessel 102, the vessel 102 may be disposed either vertically or horizontally.

In some embodiments, the vessel 102 has a conical bottom. The conical bottom may have a cone angle selected to enable mass flow of said non-free flowing drill cuttings. In some embodiments, the cone half angle may range from about 20 degrees to about 60 degrees. In other embodiments, the cone half angle may range from about 35 degrees to about 50 degrees. The conical bottom may include a plurality of injection ports. In one embodiment, there may be four injection ports spaced about 90 degrees apart. In other embodiments, any number of injection ports may be evenly spaced about the conical bottom and a number of injection points may be provided to achieve the even spacing. In some embodiments, the injection ports may be at varying heights in the conical bottom. In other embodiments, the injection ports may be aligned in a spiral fashion about the conical bottom.

In certain embodiments, a pump 109 may be used for supplying chemical additives. The pump 109 may be fabricated from materials known in the art, such as, for example, stainless steel, other types of metal, or alloys thereof. Chemical additives from the pump 109 may be injected to the vessel 102, or may be mixed with the solvent prior to being received at the vessel 102, such as within a transfer line or other container. In certain embodiments, a separate conduit may be used to provide chemical additives to the solvent or to the vessel 102. Thus, while FIG. 2 shows addition of chemical additives inline, chemical additives may be added through various other means, such as through direct injection of a liquid additive, dosing of a solid additive, mixing a solid additive with the solvent and subsequent injection of the mixture into the solvent or direct injection into vessel 102. Chemical additives that may be added include at least one of co-solvents, viscosity modifiers, surfactants, water, alcohols, polymethacrylate, hydrogenated styrene-diene copolymers, olefin copolymers, ethoxylated alcohols, styrene polyesters, or combinations thereof. The pump 109 may be fabricated from materials known in the art, such as, for example, stainless steel, other types of metal, or alloys thereof. The vessel 102 may include a pump 111 for transferring water via transfer line 112. The transfer line 112 may be any type of conduit capable of transferring water to the vessel 102 such as, for example, stainless steel and ceramic-lined stainless steel conduits.

A supply of drill cuttings having hydrocarbons thereon and disposed in the vessel 102 may be treated with liquid solvent. In some embodiments, the liquid solvent may enter from the bottom or the side of the vessel 102. After treating the drill cuttings with the liquid solvent, the liquid solvent and the solubilized hydrocarbons from the drill cuttings may be transferred from vessel 102 through a triplex filtering system having a plurality of first stage filters 301 and 302. The first stage filters 301 and 302 may be placed in transfer lines from both the top and bottom of the vessel 102. The triplex filtering system may be used to protect a compressor if used, may function as a pressure let drop valve (e.g. by decreasing pressure of the fluid passing there through), or may prevent contamination of a pressurized vapor storage system. In some embodiments, the first stage filters 301 and 302 may be coupled near the inlet/outlet ports on a first extraction tank 115. In some embodiments, the first stage filters 301 and 302 may be wedge wire type or other types that can reduce pressure drop and/or reduce drill cuttings carryover. Downstream of the first extraction tank 115 is a second extraction tank 116. The triplex filter system may remove any drill cuttings or residual particulate matter. The pressurized vapor from the vapor tank 121 is used to transfer a miscible fluid formed from the liquid solvent and solubilized contaminants from the vessel 102 to the separation tank 105 via transfer line 104. As the miscible fluid is forced out of the vessel 102, the drill cuttings can remain in the vessel 102. In some embodiments, the pressurized vapor enters near the top of the vessel 102, but in alternate embodiments, the pressurized vapor may enter near the middle or lower portion of the vessel 102. In some embodiments, the miscible fluid can exit the vessel 102 near the bottom or at the side of the vessel 102. The outlet (not shown) of the vessel 102 may be provided such that the cuttings remain in the vessel 102 during operation.

Triplex filtering systems may also include various types of filtration media in order to separate out, for example, residual particulate matter from the miscible fluid. Similar to the vessel 102, the triplex filtering system may be manufactured from materials known in the art, such as, for example, stainless steel, other metals, or alloys thereof. While embodiments in accordance with the present disclosure may include a triplex filtering system having a plurality of first stage filters 301 and 302, a first extraction tank 115 and a second extraction tank 116, certain embodiments may include one or more filtering systems having one or more tanks to remove any drill cuttings or particulate matter. A valve 117 may be disposed after the second extraction tank 116 to control the flow of the miscible fluid to the separation tank 105. After treating and removing the drill cuttings, the miscible fluid may be transferred to a separation tank 105 via line 104, which fluidly connects the triplex filtering system filters 301 and 302, tanks 115 and 116, and the separation tank 105. The drill cuttings may be captured and removed from the triplex filtering system filters 301 and 302 and the extraction tanks 115 and 116 after transferring the miscible fluid to the separation tank 105 via the pressurized vapor from tank 122.

Transfer line 104 may be any type of conduit capable of containing vapor, liquid solvent, such as carbon dioxide, and hydrocarbons into the separation tank 105. The separation tank 105 may be manufactured from materials known in the art, such as, for example, stainless steel, any other metal, or alloys thereof. As the miscible fluid enters the separation tank 105, all or a portion of the liquid solvent may flash or otherwise vaporize due to the pressure differential, thereby separating from the hydrocarbons. The hydrocarbons may subsequently be removed from the separation tank 105 via additional valves or piping (not shown). In certain embodiments, a condenser 208 may be used to condense any vapor that may have formed during the process. The condenser 208 may be fabricated from materials known in the art, such as, for example, stainless steel, or other types of metal, or alloys thereof. Liquid solvent and vapor solvent from the separation tank 105 is transferred to the condenser 208 via transfer line 106. The condensed liquid solvent from the condenser 208 may be transferred to an additional storage tank 114 via transfer line 118 and then recycled for reuse. The additional storage tank 114 may be fabricated from materials known in the art, such as, for example, stainless steel, or other types of metal, or alloys thereof.

In certain embodiments, the vapor may be vented prior to entering the separation tank 105. For example, a sensor may be used to detect the difference between the pressurized vapor and the liquid solvent. The sensor can detect if the substance is the liquid solvent or the pressurized vapor. Based on this detection, a vent may be opened to vent the pressurized vapor or captured and recycled for reuse.

In operation, drill cuttings may be introduced into the vessel 102 through a variety of conveyance systems known in the art. The flow of drill cuttings therethrough may be in batches. In batch processing, the drill cuttings may be processed in select quantities, for example, a selected quantity of drill cuttings may be processed, after which the operation is halted pending the subsequent processing of a quantity of cuttings. In some embodiments, the mechanical agitator M may be used to ensure a homogeneous bed, mitigate bed voidage resulting in reduced bulk density of the cuttings, and/or ensure a minimum mass charge of the vessel 102 is repeatable achieved relative to natural bulk density of the drill cuttings. The mechanical agitator M may be pulsed or may be rotated slowly, such as about 1 - 5 revolutions per minute (rpm), about 5-10 rpm, about 10-20 rpm. The mechanical agitator M may agitate the drill cuttings while the vessel 102 is being filled with the drill cuttings. For example, the mechanical agitator M may agitate at a lower intensity or speed if the drill cuttings are filling the vessel 102 and at a higher intensity or speed if the vessel 102 is substantially filled with drill cuttings.

After the drill cuttings are in the vessel 102, the vessel 102 is pressurized. The vessel 102 may be pressurized by pressurized vapor from tank 121. The valve 122 may be disposed on the tank 121 to control the flow of pressurized vapor to the vessel 102. In some embodiments, the drill cuttings may be agitated by the mechanical agitator M. The mechanical agitator may be pulsed or may be rotated slowly, such as 1 - 5 revolutions per minute (rpm), 5 - 10 rpm, 10-20 rpm.

In the case the solvent is carbon dioxide, liquid carbon dioxide can be introduced into the vessel 102 for dissolving the hydrocarbons on the drill cuttings. The liquid carbon dioxide may be introduced in a batch manner or continuously into the vessel 102 until a fluid level in the extraction tank is met. The hydrocarbons become solubilized with the liquid carbon dioxide to form a miscible fluid. The liquid carbon dioxide may flow through the drill cuttings or may be agitated with the drill cuttings, *i.e.,* by operating the agitator M. Thus, the content of the vessel 102 may include a miscible fluid portion and a drill cutting portion (or a solids portion). In some embodiments, the time of agitation may be about 5, 10, 15, 20, 25, 30, 45, or 60 minutes or any value therebetween. The mechanical agitator may be pulsed or may be rotated slowly, such as about 1 - 5 revolutions per minute (rpm), about 5-10 rpm, or about 10-20 rpm. The agitator may be used in a mode that reduces material attrition, develops decreased bed turns and prevents ratholes or channeling from occurring within the bed depth. In some embodiments, agitating the miscible fluid and in-treatment drill cuttings is at a speed less than typical agitation speeds used to turn the tank contents of the drill cuttings. In other embodiments, the miscible fluid and in-treatment drill cuttings may be agitated by starting and stopping the mechanical agitator M for at least one cycle. In other embodiments, the miscible fluid and in-treatment drill cuttings may be agitated by operating the mechanical agitator M continuously at different speeds or at different intensities. In other embodiments, the time of agitation may be linked to some parameter, such as oil content of cuttings (OCC) level on the cuttings, or setpoints determined by the operator. The hydrocarbons and liquid carbon dioxide may then be transferred to the duplex filtering system via transfer line 104 to remove residual particulate matter. The hydrocarbons and the liquid carbon dioxide are then transferred to the separation tank 105.

Pressurized vapor from the tank 121 via conduit 119 can be used to displace or transfer the miscible fluid from the vessel 102 to the separation tank 105. The pressurized vapor may be introduced in a batch manner to displace the miscible fluid. In some embodiments, the pressurized vapor displaces the hydrocarbons and liquid carbon dioxide in a single cycle. In some embodiments, the temperature and pressure of the pressurized vapor may be supplied to maintain the liquid carbon dioxide in a liquid state. In some embodiments, the temperature and pressure of the pressurized vapor may be supplied to vaporize the liquid carbon dioxide. In some embodiments, the time of displacement may be about 5, 10, 15, 20, 25, 30, 45, or 60 minutes or any value therebetween. A cycle can include liquid carbon dioxide addition, agitation and or displacement and the cycle may be repeated a number of times, such as 2, 3, or 4. In other embodiments, the cycles may be repeated until the hydrocarbons on the drill cuttings is one percent or less dry weight, less than two percent dry weight or some other parameter set by the operator or regulatory law. The hydrocarbons and liquid carbon dioxide may be displaced by creating a pressure differential between the vessel 102 and the separation tank 105. In other embodiments, the pressure differential may be between the vessel 102 and any downstream equipment. The displacement of the hydrocarbons and liquid carbon dioxide may occur after the fluid level of liquid carbon dioxide is reached or after a length of time after the fluid level is reached.

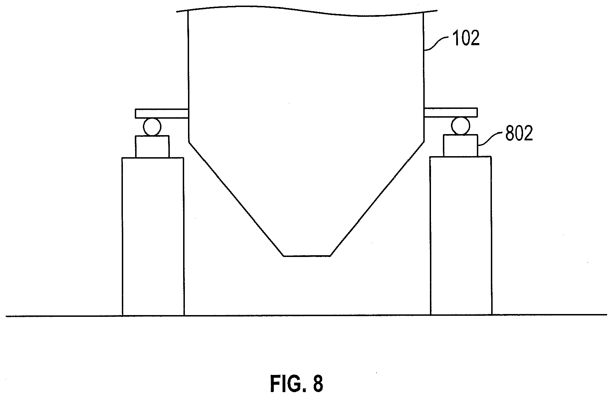

The displacement or transfer of the hydrocarbons and liquid carbon dioxide from the vessel 102 to the separation tank 105 may occur while also agitating the drill cuttings, *i.e.,* by operating the agitator M. In some embodiments, the time of agitation may be about 5, 10, 15, 20, 25, 30, 45, or 60 minutes or any value therebetween. The agitator M may be pulsed or may be rotated slowly, such as about 1 - 5 revolutions per minute (rpm), about 5-10 rpm, about 10 - 20 rpm. In some embodiments, the time of agitation may correspond to and/or may be based on the rate of the hydrocarbons and liquid carbon dioxide exiting the vessel 102. In some embodiments, the agitator M may be used in a mode to avoid any ratholes or channeling from occurring within the bed depth. In other embodiments, the time of agitation may be linked to some parameter, such as oil content of cuttings (OCC) level on the cuttings, or setpoints determined by the operator. In some embodiments, the speed of agitation may be based on an emptying mass flow rate of the extraction tank. The vessel 102 may be configured with at least one load cell 802 configured to measure the weight of the contents of the vessel 102 as shown in FIG. 8. In one embodiment, the load cells 802 may be positioned on the vessel 102. As an example, the load cells 802 can be placed at one or more legs of the vessel 102. The load cells 802 may be configured to determine a weight of the vessel 102 and changes in the weight of the vessel 102 based on changes to its contents. The agitation rate may be increased if the weight of the vessel 102 is not decreasing at an expected rate as measured by the load cells 802. In other embodiments, the agitation rate may be adjusted based on the pressure of the vessel 102. In some embodiments, the pressure of vessel 102 is measured in the line exiting the vessel 102 and the agitation rate may be increased if the pressure drops rapidly.

The separation tank 105 may use pressure change to flash and separate the liquid carbon dioxide from the hydrocarbons. For example, the liquid carbon dioxide may change states to vapor carbon dioxide and the hydrocarbons may separate therefrom. The separation tank 105 may also provide separation of the carbon dioxide and the pressurized vapor. After the carbon dioxide is separated from the hydrocarbons, the liquid carbon dioxide and carbon dioxide vapor that may have formed during the process may be transferred to the carbon dioxide condenser 208 to be condensed, and then transferred to the liquid carbon dioxide storage tank 114 for subsequent reuse. The pressurized vapor may be recycled to a storage tank (not shown) for subsequent reuse after separation from the liquid carbon dioxide and/or hydrocarbons, or the pressurized vapor or may be vented.

At the end of the extraction cycle, residual liquid carbon dioxide may be present in vessel 102. Water may be pumped from pump 111 to the vessel 102 via transfer line 112 to displace residual liquid carbon dioxide from the vessel 102 to the liquid carbon dioxide storage tank 114. The addition of water to the vessel 102 may reduce the amount of carbon dioxide lost during depressurization of the vessel 102 and may further assist in slurrying and removal of the drill cuttings from the vessel 102.

In some embodiments, if carbon dioxide is used as the pressurized vapor, the carbon dioxide tank 100 may supply both carbon dioxide vapor to the vessel 102 via the transfer line 118 and liquid carbon dioxide to the vessel 102 via the transfer line 101. Carbon dioxide may be provided in both states (liquid and vapor) through a variety of conveyance systems known in the art. Furthermore, if carbon dioxide is used as the pressurized vapor, the separation of the liquid carbon dioxide and the hydrocarbons may occur by vaporizing the carbon dioxide. A portion of the carbon dioxide vapor may be transferred to the condenser 208 and then to the storage tank 114 for subsequent reuse. A separate portion of the carbon dioxide vapor may be recycled to a storage tank for subsequent reuse.

In some embodiments, the drill cuttings may be discharged from the vessel 102 by a pressurized vapor. The mechanical agitator M may be pulsed or rotated quickly, such as about 5-15 rpm, about 15 - 20 rpm, about 20 - 30 rpm. The agitator may be used to prevent channeling and/or expedite the conveyance of the drill cuttings. In some embodiments, the agitation speed has an intensity to ensure a minimum mass flow rate as registered by the loss in weight on the load cells 802 and minimum conveying pressures. In other embodiments, air may be intermittently supplied to the vessel 102 while discharging the drill cuttings to assist in collapsing any cohesive or mechanical arches that may form in the bottom section of the vessel 102.

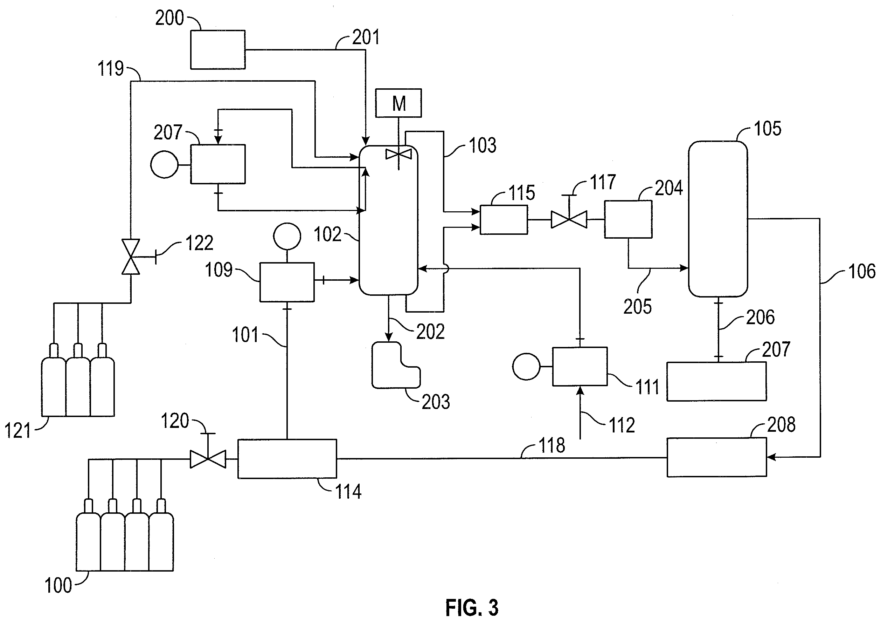

Referring to FIG. 3, an alternate schematic illustration of a system for extracting hydrocarbons from drill cuttings in accordance with embodiments disclosed herein is shown, wherein like parts are represented by like reference numbers of FIG. 2. The system, as shown, includes a cuttings storage tank 200, wherein drill cuttings are stored and transferred to the vessel 102. Examples of storage tanks may include pits, collection vats, storage vessels, and reservoirs, which in certain embodiments, may exist as part of a rig infrastructure. The cuttings storage tank 200 is connected to the vessel 102 via the transfer line 201. Transfer line 201 may be any type of conduit capable of transferring drill cuttings to fill the extraction vessel 102. In some embodiments, more than one vessel 102 may be included. All the necessary piping may be provided in order to have a plurality of extraction tanks and associated components (transfer lines, purge valves, mechanical agitator, recirculation piping). In some embodiments, the plurality of extraction tanks 102 may be serially connected. Such transfer lines 201 may also include conveyance devices such as augers, belts, or conduits capable of allowing pneumatic or hydraulic transference. Liquid carbon dioxide is transferred from the liquid carbon dioxide storage tank 100 to the vessel 102 via transfer line 101. Pressurized gas is transferred from the pressure tank 121 to the vessel 102 via transfer line 119. The vessel 102 may be periodically purged by opening purge valve 103 to relieve pressure, thereby preventing structural damage to the extraction tank. The vessel 102 also includes an outlet 202 for removing drill cuttings 203. The outlet 202 may be near the bottom or on the side of the tank 102. The drill cuttings may pass through outlet 202 and may then be collected for disposal. The discharge of the drill cuttings from the vessel 102 may comprise pneumatic or hydraulic transference. In some embodiments, the drill cuttings may be discharged from the extraction tank 202 by a pressurized vapor. The vessel 102 may include a mechanical agitator M to agitate the drill cuttings in the vessel 102. The agitator may be used to prevent channeling and/or expedite the conveyance of the drill cuttings. The vessel 102 may include a recirculation pump 207 that may also provide additional hydraulic mixing and fluidizing for enhanced rate of mass transfer in the vessel 102. In certain embodiments, a pump 109 may be used for supplying chemical additives. Chemical additives from pump 109 may be injected to the vessel 102, or may be mixed with the carbon dioxide inline. Chemical additives that may be added include at least one of co-solvents, viscosity modifiers, surfactants, water, alcohols, polymethacrylate, hydrogenated styrene-diene copolymers, olefin copolymers, ethoxylated alcohols, styrene polyesters, or combinations thereof. Vessel 102 may include a pump 111 for transferring water via transfer line 112. Pump 109 may be fabricated from materials known in the art, such as, for example, stainless steel, other types of metal, or alloys thereof. Transfer line 112 may be any type of conduit capable of transferring water to the vessel 102 such as, for example, stainless steel and ceramic-lined stainless steel conduits.

In this embodiment, the hydrocarbons separated from the drill cuttings and the liquid carbon dioxide may be transferred from the vessel 102 via transfer line 104 to a filtering system 115 to remove residual drill cuttings or particulate matter from the hydrocarbon and carbon dioxide mixture. Similar to the vessel 102, the filtering system 115 may be manufactured from materials known in the art, such as, for example, stainless steel, other metals, or alloys thereof. Certain embodiments may include one or more filtering systems having one or more tanks to remove residual drill cuttings or particulate matter from the hydrocarbon and carbon dioxide mixture. A valve 117 may be disposed on the filtering system 115 to control the flow of hydrocarbons and liquid carbon dioxide to the separation tank 105. In one embodiment, transfer line 104 is fluidly connected to a carbon dioxide heater 204 for converting at least a portion of the liquid carbon dioxide into carbon dioxide vapor. The carbon dioxide heater 204 is fluidly connected to the separation tank 105 via transfer line 205. The separation tank 105 may also have an outlet 206 for removing hydrocarbons to a hydrocarbon collection tank 207.

Pressurized vapor, liquid carbon dioxide, and carbon dioxide vapor from the separation tank 105 may be transferred to the carbon dioxide condenser 208 via transfer line 106. After condensing carbon dioxide vapor, the liquid carbon dioxide may be transferred to the additional liquid carbon dioxide storage tank 114 via transfer line 118 and then recycled for subsequent use.

During operation, the drill cuttings are introduced into the vessel 102 from the cuttings storage tank 200 via transfer line 201 through a variety of conveyance systems known in the art. The flow of drill cuttings may be transferred in batches. Liquid carbon dioxide is then transferred to the vessel 102 via transfer line 101. In the vessel 102, the hydrocarbons on the surface of drill cuttings dissolve in the liquid carbon dioxide. The liquid carbon dioxide may be introduced in a batch manner and allowed to circulate or agitate with the drill cuttings. The circulation of the liquid carbon dioxide may be stopped before displacing or transferring the liquid carbon dioxide and hydrocarbons from the vessel 102. In some embodiments, the time of agitation may be about 5, 10, 15, 20, 25, 30, 45, or 60 minutes or any value therebetween. In other embodiments, the time of agitation may be linked to some parameter, such as OOC level on the cuttings required by regulatory statutes. The drill cuttings may be separated from the liquid carbon dioxide and hydrocarbons using the pressurized vapor from tank 121. Clean drill cuttings 203 may then be removed from the vessel 102 through the outlet 202. In some embodiments, the drill cuttings may be discharged from the extraction tank 202 by a pressurized vapor. In other embodiments, the mechanical agitator may be pulsed or rotated quickly, such as about 5-15 rpm, about 15-20 rpm, about 20 - 30 rpm. The agitator may be used to expedite the conveyance of the drill cuttings.

Pressurized vapor from pressure tank 121 is used to transfer the hydrocarbons removed from the cuttings and liquid hydrocarbon to the separation tank 105. The pressurized vapor may be introduced in a batch manner. In some embodiments, the temperature and pressure of the pressurized vapor may be supplied to maintain the liquid carbon dioxide in a liquid state. The temperature and pressure of the pressurized vapor may be supplied to vaporize the liquid carbon dioxide. In some embodiments, the time of displacement may be about 5, 10, 15, 20, 25, 30, 45, or 60 minutes or any value therein. The cycle of liquid carbon dioxide addition (i.e., solubilizing), agitation and displacement may each be repeated a number of times, such as 2, 3, or 4. In other embodiments, the cycles may be repeated until the oil content of cuttings is less than 1% dry weight, less than 2% dry weight or some other parameter set by the operator or regulatory law.

In some embodiments, the drill cuttings may be introduced into the vessel 102 from the cuttings storage tank 200 via transfer line 201 using a gas compressor (not shown). In some embodiments, the compressor may be fluidly connected to storage tank 200 to supply a gas to transfer the drill cuttings to the vessel 102. In some embodiments, the storage tank 200 may have a conical bottom. The conical bottom may have a cone angle selected to enable mass flow of said non-free flowing drill cuttings. In some embodiments, the cone angle may range from about 20 degrees to about 60 degrees. In other embodiments, the cone angle may range from about 35 degrees to about 50 degrees.

The pressurized vapor, hydrocarbons and liquid carbon dioxide are then transferred via valve 117 to expand the liquid CO2 to vapor and on to the carbon dioxide heater 204, where the carbon dioxide is heated to form liquid free carbon dioxide vapor, thereby releasing the soluble hydrocarbons in the carbon dioxide heater 204. The hydrocarbons and the carbon dioxide vapor are then transported to the separation tank 105 via transfer line 205. The hydrocarbons and liquid carbon dioxide may be separated by flashing the carbon dioxide. Hydrocarbons may then be removed from the separation tank 105 through the outlet 206 into the collection tank 207. The hydrocarbons may be removed for reuse from the separation tank 105 through the outlet 206 through a variety of systems known in the art. The carbon dioxide vapor is then transferred to the carbon dioxide condenser 208, wherein the carbon dioxide vapor is cooled to form liquid carbon dioxide. The liquid carbon dioxide is transferred to the additional liquid carbon dioxide tank 114 which is then recycled for subsequent use.

The pressurized vapor may be separated from the hydrocarbons and liquid carbon dioxide prior to entering the carbon dioxide heater 204 by venting the pressurized vapor. The pressurized vapor may be recycled to a storage tank (not shown) for subsequent reuse. In some embodiments, the pressurized vapor may be separated from the hydrocarbons and carbon dioxide vapor prior to the separation tank 105, in the separation tank 105, or after the separation tank 105. The pressurized vapor may be vented or may be recovered for reuse.

At the end of the extraction cycle, residual liquid carbon dioxide may be present in vessel 102. Water may be pumped from pump 111 to the vessel 102 via transfer line 112 to displace residual liquid carbon dioxide from the vessel 102 to the liquid carbon dioxide storage tank 114. The addition of water to the extraction 102 may reduce the amount of carbon dioxide lost during depressurization of the vessel 102 and may further assist in slurrying and removal of drill cuttings from the vessel 102.

In some embodiments, if carbon dioxide is used as the pressurized vapor, the carbon dioxide tank 100 may supply both carbon dioxide vapor to the vessel 102 via the transfer line 118 and liquid carbon dioxide to the vessel 102 via the transfer line 101. Carbon dioxide can be provided in both states (liquid and vapor) through a variety of conveyance systems known in the art. In some embodiments, a portion of the carbon dioxide vapor may be transferred to the carbon dioxide condenser 208 and then to the liquid carbon dioxide storage tank 114 for subsequent reuse. A separate portion of the carbon dioxide vapor may be recycled to a storage tank for subsequent reuse. The operation of the embodiment of Fig. 3 may be substantially similar to that described for the embodiment of Fig. 2, including filling, extraction, vapor displacement and agitation described above.

In accordance with embodiments described above, the drill cuttings stored in the cuttings storage vessel may be dry or may be wet. Wet cuttings contain water and/or oil, and as such, may be free flowing, non-free flowing, or pasty. In certain embodiments, the drill cuttings may be pre-dried by a vortex dryer to produce substantially dry drill cuttings which, in some aspects, may be free flowing solids, which abide by the laws of Newtonian flow.

As described above, methods according to some embodiments in the present invention use pressurized vapor at a pressure of at least 50 bar. In other embodiments, the methods may include using pressurized vapor at pressures ranging from between about 0 bar to about 50 bar, from between about 10 bar to about 40 bar, or from between about 20 bar to about 30 bar. In particular embodiments disclosed herein, methods may include using pressurized vapor at a temperature of less than 10 °C, less than 0 °C, less than 20 °C, wherein in other embodiments, the method may include using pressurized vapor at temperatures between about -20 °C and 20 °C.

In accordance with embodiments described above, the methods may include adding viscosity modifiers to alter the viscosity of drill cuttings in liquid carbon dioxide wherein the viscosity modifiers may include, for example, polymethacrylate (PMA), hydrogenated styrene-diene copolymers, olefin copolymers, styrene polyesters, and the like.

In accordance with embodiments described above, the methods may include adding additives such as co-solvents, viscosity modifiers, surfactants, and combinations thereof, which may be added to either the cuttings or liquid carbon dioxide to alter the behavior of the drill cuttings in the liquid carbon dioxide. In accordance with embodiments described above, the additives may include, for example, water, alcohol, polymethacrylate, hydrogenated styrene-diene copolymers, olefin copolymers, ethoxalated alcohols, styrene polyesters, and combinations thereof.

In accordance with embodiments disclosed above, the methods may provide for decreased energy costs for processing. In accordance with embodiments disclosed above, the methods may provide for decreased processing time.

In some embodiments, a power generation and carbon dioxide recovery system may be included. Such systems may be installed on an offshore rig, thereby providing a method for extracting hydrocarbons from cuttings. An offshore rig may have a diesel generator as part of the initial rig infrastructure. A byproduct of power generation from diesel generators and/or boiler systems is carbon dioxide; however, the byproducts of power generation may result in relatively low carbon dioxide content.

To recover carbon dioxide from streams having a low carbon dioxide content, such as a boiler flue gas stream, one solution is to scrub the gas mixture which is lean in carbon dioxide with a suitable solvent, such as water, monoethanolamine, sulfolane or potassium carbonate, to dissolve the carbon dioxide and then to strip the carbon dioxide from the solution so obtained; *i.e.,* another fluid is introduced into the system in order to achieve the necessary separation. The carbon dioxide can then be compressed, dried, cooled and further purified by partial condensation or distillation. Various other processes to recover and/or purify carbon dioxide are disclosed in U.S. Patent Nos. 4,602,477, 4,639,257, 4,762,543, 4,936,887, 6,070,431, and 7,124,605, among others.

After the carbon dioxide is captured, compressed, dried, cooled, and treated, the carbon dioxide may then be stored for further use on the rig, such as through hydrocarbon extraction methods described above. Examples of carbon dioxide generators and recovery systems that may also be used according to embodiments of the present disclosure include systems commercially available from Buse Gastek GmbH & Co. KG, Germany.

After the carbon dioxide is captured and processed, the carbon dioxide may be used in hydrocarbon extraction systems, such as those described in Figures 2-3, above. In certain embodiments, additional sources of carbon dioxide may be used, such as, for example, gas generated during drilling.

In still other embodiments, the introduction of cuttings to the extraction vessel may be facilitated through the use of one or more pressurized vessels. Thus, pressurized vessels that may already be available on an offshore rig may be used to transfer cuttings to be treated from a storage location to the extraction vessel. Additionally, pressurized vessels may be used to store and/or transfer in-treatment cuttings. Examples of pressurized vessels that may be used according to embodiments of the present disclosure are explained in detail below.

As referred to herein, a pressurized container, pressurized cuttings storage vessel, and a cuttings storage vessel may be used interchangeably. One type of pressurized vessel that may be used according to aspects disclosed herein includes an ISO-PUMP™, commercially available from M-I LLC, Houston, Texas. A further description of pressurized containers that may be used with embodiments of the present invention is discussed in U.S Patent No. 7,033,124.

During operation, a pressurized transference device may be fluidly connected to pressurized containers, such as those described above, thereby allowing materials to be transferred therebetween. Because the materials are transferred in batch mode, the materials travel in slugs, or batches of material, through a hose connected to an outlet of the pressurized transference device. Such a method of transference is a form of dense phase transfer, whereby materials travel in slugs, rather than flow freely through hoses, as occurs with traditional, lean phase material transfer.

### Examples

The following examples illustrate embodiments of the present invention and may provide meaningful comparisons illustrating the advantages of the method according to the present invention.

A pilot plant was built with a test vessel in order to determine operational parameters for removing hydrocarbons from cuttings using liquid carbon dioxide for extraction and vapor displacement. The vessel had a 2 liter capacity and a length to diameter ratio (L:D) of 2:1.

During all examples, the total cycle time was 30 minutes, but with varying cycle times for CO₂ extraction and vapor displacement as shown in Table 1 below. CO₂ was delivered to the tank from the bottom except for Example 6 which had CO₂ delivered from the top. Pressurized vapor was delivered to the tank from the top. Comparative Example 1 does not use vapor displacement, but carbon dioxide flowed continuously into the test vessel from the bottom and out the top at a constant flow rate for the 30 minutes. The temperature of the vessel and its contents was largely controlled by the flow of carbon dioxide and/or displacement gas into the test vessel, with a chilling/heating jacket available if required. During start up, the test vessel was pressurized to a desired extraction condition, thereby allowing the cuttings to adjust to the operating temperature of the carbon dioxide flow. All examples had an agitation of 8 rpm for 30 minutes at 20 °C

Table 1, below, summarizes the extraction/displacement test conditions.

**Table 1**

| Test# | Extraction Cycle | Cycle (min CO₂/min N₂) | Number of cycles | Total Cycle Time |
|---|---|---|---|---|
| 1 | CO₂ Extraction and N₂ Displacement | 10/5/10/5 | 2 | 30 |
| 2 | CO₂ Extraction and N₂ Displacement | 10/5/15 | 1.5 | 30 |
| 3 | CO₂ Extraction and N₂ Displacement | 10/5/10/5 | 2 | 30 |
| 4 | CO₂ Extraction and N₂ Displacement | 10/5/10/5 | 2 | 30 |
| 5 | CO₂ Extraction and N₂ Displacement | 5/5/5/5/5/5 | 3 | 30 |
| 6 | CO₂ Extraction (downflow) and N₂ Displacement | 10/5/10/5 | 2 | 30 |
| 7 | CO₂ Extraction and CO₂ Displacement | 10/5/10/5 | 2 | 30 |
| 8 | CO₂ Extraction and CO₂ Displacement | 10/5/10/5 | 2 | 30 |
| Comp. Ex. 1 | Regular CO₂ Extraction | 30 | 1 | 30 |

The untreated cuttings were analyzed for percent of OOC using a retort and InfraCal® analyzers. Samples were collected at the end of the test period from the top, middle and bottom of the extraction vessel. Gas Chromatography (GC) and InfraCal® analysis are performed on the samples.

Table 2, below, summarizes the extraction test results performed.

**Table 2**

| Test # | 1 | 2 | 3 | 4 | 5 | 6 | 7 | 8 | Comp. Ex. 1 |
|---|---|---|---|---|---|---|---|---|---|
| Mass Raw cuttings(g) | 1121.15 | 1122.92 | 1120.28 | 1070.19 | 1140.83 | 1120.6 | 1120.21 | 1199.5 | 1242.64 |
| Displacement flow rate (g/min) | 100 | 100 | 150 | 200 | 150 | 100 | 300 | 30 | 100 |
| P (psig) | 950 | 950 | 950 | 950 | 950 | 950 | 950 | 950 | 950 |
| T (°0C) | 20 | 20 | 20 | 20 | 20 | 20 | 20 | 20 | 20 |
| OOC Untreated Cuttings InfraCal (%) | 10.65 | 9.00 | 11.63 | 13.00 | 11.15 | 9.25 | 11.36 | 11.44 | 13.77 |
| OOC Untreated Cuttings Retort (%) | 9.43 | 8.81 | 10.24 | 9.16 | 9.16 | 9.3 | 9.53 | 9.97 | 9.16 |
| Average Oil in in-treatment cuttings InfraCal (%) | 1.03 | 1.22 | 0.98 | 0.87 | 0.87 | 1.32 | 1.24 | 1.13 | 1.76 |
| Oil in in-treatment cuttings GC/FIR | 0.786 | 0.957 | 0.930 | 0.902 | 0.736 | 1.212 | 0.794 | 0.945 | 1.38 |
| Oil Recovery (%) | 93 | 94 | 87 | 94 | 93 | 87 | 69 | 66 | 83 |
| Oil Recovered (g) | 98.80 | 93.11 | 100.34 | 91.74 | 96.93 | 90.67 | 88.26 | 90.84 | 97.93 |
| Solvent/Feed ratio | 0.0037 | 0.0047 | 0.0047 | 0.0059 | 0.0050 | 0.0035 | 0.00304 | 0.00258 | 0.00459 |
| Solvent/Oil ratio | 0.043 | 0.057 | 0.053 | 0.070 | 0.059 | 0.044 | 0.039 | 0.034 | 0.058 |

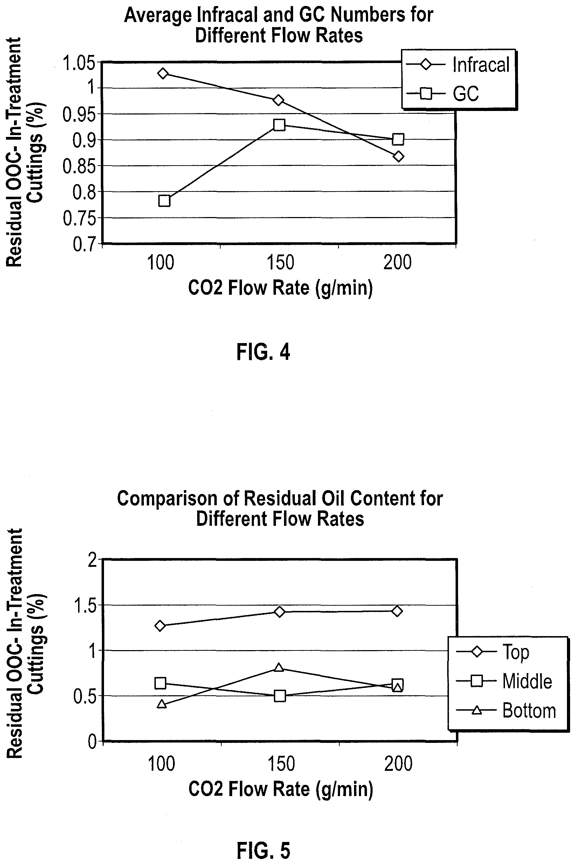

The carbon dioxide flow rate was varied in Examples 1, 3 and 4 maintaining the same nitrogen displacement cycle. The OOC numbers for the drill cuttings is shown in Fig. 4. Different samples were collected at top, middle and bottom and for the various carbon dioxide flow rates, as set forth in Fig. 5.

It was observed that particle size distribution (morphology) of the cuttings changed with the depth of the bed, with coarser (larger) cuttings migrating to the top and the finer cuttings accumulating at the lower middle and bottom of the bed. The particle size distribution showed the same trend as the oil content. The higher oil content, the bigger the particle size. This may occur due to higher oil content providing strength to the cuttings causing less breakage or the packing force of the agitator at the bottom forces the cuttings to break into loose dust particles.

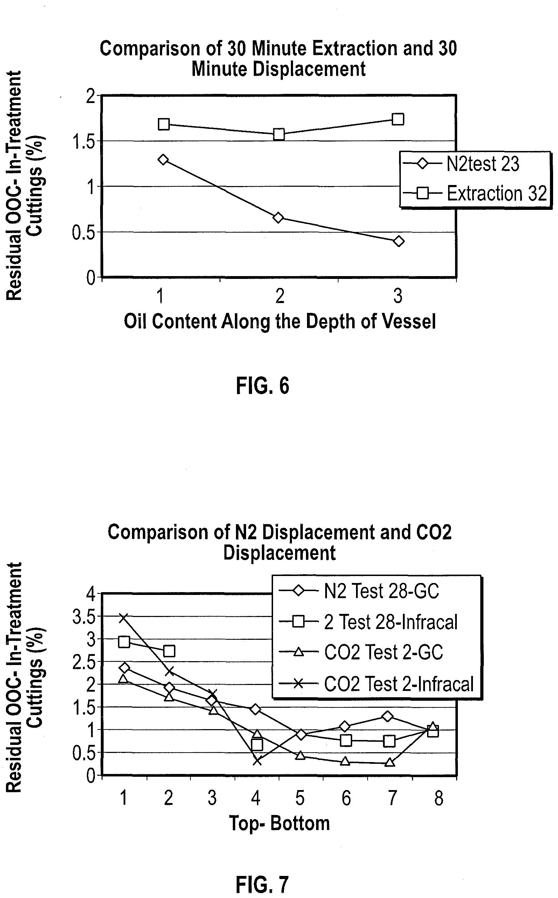

As seen in Fig. 6, comparing traditional extraction/displacement (Comparative example 1) to nitrogen displacement suggests lower average oil content for the same period of time. The average oil content may satisfy the regulatory standard of less than one percent dry weight of hydrocarbons on the drill cuttings. The nitrogen displacement may meet standards in a more efficient manner or in less time.

The use of carbon dioxide as a displacement vapor was examined in Examples 8 and 9, and as shown in Fig. 7, the results are similar to those for nitrogen displacement.

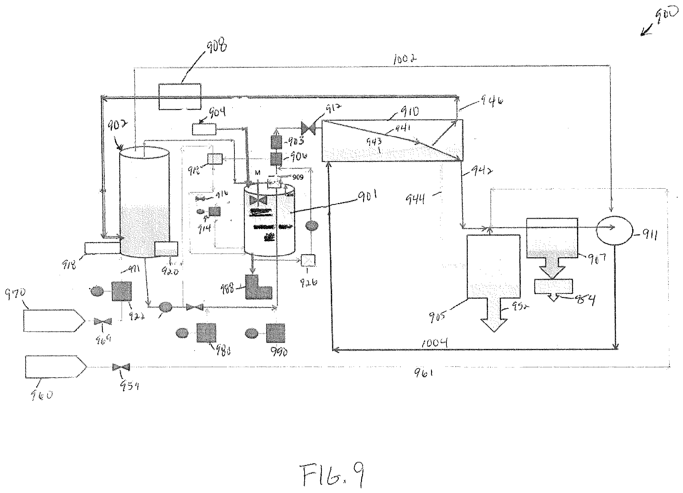

Fig. 9 illustrates a schematic of a system 900 for removing contaminants from solid particulate. The system 900 is described in relation to removing hydrocarbons from drill cuttings. However, a person having ordinary skill in the art will appreciate that the example system can be used to remove other contaminants from solid particulates in other industries.

As shown in Fig. 9, the system 900 is provided with a vessel 901 and a supply tank 902. The vessel 901 can be constructed similar to the vessel 102 as set forth in FIGS. 2 and 3. Drill cuttings can be conveyed into the vessel 901 via a cuttings supply component 904 that may comprise a drill cuttings blower or other type of apparatus or system for moving the drill cuttings. The drill cuttings can be contaminated with hydrocarbons to an undesirable level, such as an amount greater than one-percent by mass. The system 900 can be utilized to reduce the amount of hydrocarbons on or in the drill cuttings to one-percent or less by mass.

The vessel 901 may be at least partially filled with the drill cuttings. In an embodiment, the vessel 901 may be filled with drill cuttings to a portion of capacity, such as eighty percent of capacity to provide space within the vessel 901 for the drill cuttings to move and contact a solvent. Prior to filling the vessel 901 with the drill cuttings, a vent or other component of the vessel 901 can be opened to permit air or other trapped gasses in the vessel 901 to escape.

The agitator M may be activated while filling the vessel 901. The agitator M can be the same agitator M set forth above with respect to FIGS. 2 and 3. Upon filling the vessel 901 with the desired amount of the drill cuttings, the vent or other component of the vessel 901 can be closed to prevent fluid communication out of the vessel 901. Vapor or gas can then be provided to the vessel 901. The vapor or the gas may be the solvent in vapor or gas form or may be a different substance. The present example will be described as utilizing vapor carbon dioxide and a solvent comprising liquid carbon dioxide. However, a person having ordinary skill in the art will appreciate that another substance may be utilized to pressurize the vessel 901, such as air, nitrogen, or an inert gas. Similarly, a person having ordinary skill in the art will appreciate that another solvent may be utilized depending on the solid particulate and the contaminant. In the case of drill cuttings, a person having ordinary skill in the art will appreciate that another substance can be provided as a solvent for drill cuttings, such as butane, propane and others.

In FIG. 9, vapor carbon dioxide can be provided to pressurize the vessel 901 to a desired pressure. The vessel 901 can be provided with vapor carbon dioxide from the storage tank 902. In an embodiment, the storage tank 902 may store carbon dioxide for use in the system 900, and the storage tank 902 may be structurally similar to the solvent tank 100 as set forth with respect to FIGS. 2 and 3. The carbon dioxide in the storage tank 902 can be in liquid and vapor state. A cooler 918 and a heater 920 may be positioned to heat or cool the storage tank 902 to maintain a desired amount of vapor and liquid carbon dioxide. The vapor carbon dioxide may be provided from a top end of the storage tank 902 to the vessel 901. In an embodiment, the vessel 901 may be pressurized to approximately 40-55 bar or other pressure that will be appreciated by those having ordinary skill in the art.

After pressurizing the vessel 901, liquid carbon dioxide can be provided to the vessel 901. A sensor, such as a level switch (not shown), can be provided in the vessel 901 to indicate that the liquid solvent has adequately filled the vessel 901. The hydrocarbons on or in the drill cuttings are soluble in the liquid carbon dioxide such that the liquid carbon dioxide can form a miscible fluid comprising the liquid carbon dioxide and the hydrocarbons. The agitator M may be operated at different intensities during the filling of the vessel 901. For example, the agitator M may be operated at a low intensity if the volume of the carbon dioxide is low and increased as the volume of the liquid carbon dioxide in the vessel 901 increases. The intensity of the agitation by the agitator M can change depending on the solvent, amount of drill cuttings and/or the amount of solvent in the vessel 901.

Circulation pump 914 can be utilized, if necessary, to circulate the miscible fluid and/or the liquid carbon dioxide within the vessel 901. Chemical additives, as described above, may be added via the chemical pump 980.

At this point, there are a number of different extraction processes for removing the hydrocarbons from the drill cuttings and then separating the hydrocarbons from the solvent. One such method to extract the hydrocarbons from the drill cuttings and move the miscible fluid formed therein through the system 900 is a vapor displacement method.

With respect to the vapor displacement method, this method can be advantageous over the other methods. For example, the vapor displacement method permits vapor, such as the solvent in vapor form to be provided to the vessel 901. The vapor then displaces the miscible fluid from the vessel 901. One of the reasons this method can be advantageous is that it can maximize the amount of hydrocarbons exiting the vessel 901 in the miscible fluid. The vapor can be added to a top of the vessel 901 to displace the miscible fluid out of the vessel 901, such as out of a bottom of the vessel 901. Other methods, such as utilizing additional liquid solvent to displace the miscible fluid, limit the amount of hydrocarbons that can be carried or otherwise transported with the miscible fluid. The vapor displacement may be utilized without, after, or even prior to adding additional liquid solvent to displace the miscible fluid.

The miscible fluid is displaced out of the vessel 901 and passes through a series of filters 903, 906, and 909 that prevent drill cuttings from passing therein. The filters 903, 906, 909 can prevent portions of the drill cuttings, commonly referred to as "fines" from passing threthrough. The miscible fluid then passes through a pressure let down valve 912 that decreases the pressure of the miscible fluid. The pressure of the miscible fluid can decrease such that the miscible fluid is at a liquid and vapor state.

The miscible fluid passes through a transfer line 941 of an economizer 910. Heat may be provided to the miscible fluid at the economizer 910 to vaporize the miscible fluid. The vapor carbon dioxide separates from the hydrocarbon and any liquid carbon dioxide portion. The vapor carbon dioxide portion can exit the economizer 910 via transfer line 942 and flow into a compressor 911. The hydrocarbon portion can exit the economizer 910 and pass through a transfer line 944 into a collection tank 905. Any carbon dioxide passing into the collection tank can be vaporized and separated by the separator 907, which may be a cyclonic separator, for example. The hydrocarbon exits the collection tank at 952 and the separator at 954. The vapor carbon dioxide from the economizer 910, the collection tank 905 and/or the separator 907 moves to the compressor 911. The vapor carbon dioxide from the storage tank 902 can also be provided to the compressor 911. At the compressor, the vapor carbon dioxide can increase in pressure, such as to the pressure exiting the vessel 901.

The vapor carbon dioxide exiting the compressor 911 passes into the economizer 910 via the transfer line 1004. The vapor carbon dioxide passes through the economizer 910 via transfer line 943 and loses heat to the miscible fluid passing through the economizer 910 in the transfer line 941. The carbon dioxide exiting the economizer 910 at 946 is directed to a condenser or cooler 908 to cool or otherwise liquefy the carbon dioxide. The liquid carbon dioxide is then returned to the storage tank 902.

Upon forcing the miscible fluid out of the vessel 901 with a vapor, the vessel 901 contains the drill cuttings and vapor. The vapor carbon dioxide can be removed from the vessel 901. The drill cuttings can then move out of the vessel 901, such as by pneumatically conveying the cuttings out of the vessel 901. In an embodiment, air can be applied to the vessel 901 to force the drill cuttings out of the vessel 901 to a cuttings collector 988. In an embodiment, the drill cuttings contain less than one-percent hydrocarbons and can be safely disposed offshore.

While the system 900 advantageously recycles and reuses carbon dioxide, in the event carbon dioxide is lost from the system 900 or additional carbon dioxide is needed, the system 900 provides for adding liquid and/or vapor carbon dioxide. Liquid carbon dioxide can be provided to the system 900 at the liquid carbon dioxide make-up 970 and be provided through valve 969 to the pump 922 and transfer line971 into the storage tank 902. Vapor carbon dioxide can be added to the system 900 at the vapor carbon dioxide make-up 960 and be provided through the valve 959 to the transfer line 961 and to the compressor 911.

Advantageously, embodiments disclosed herein may provide methods for processing drill cuttings with increased efficiency. In some embodiments, the cycle time for processing drill cuttings may be reduced by about 50%. Additionally, such methods may result in operations with lower energy requirements. The methods may also allow for the recovery of hydrocarbons at both off-shore and on-shore drilling sites, wherein such hydrocarbons may be used in reformulating drilling muds.

In the event that a vapor displacement was not utilized and the vessel 901 is filled with liquid carbon dioxide and drill cuttings having less than a predetermined amount of hydrocarbons, water may be added to the vessel 901 via the water pump 990 to displace the liquid carbon dioxide until only water and drill cuttings remain in the vessel 901. The water and the drill cuttings can then be safely disposed, such as by conveying into the ocean if offshore.

While the present invention has been described with respect to a limited number of embodiments, those skilled in the art, having benefit of this disclosure, will appreciate that other embodiments can be devised which do not depart from the scope of the invention as disclosed herein and defined by the appended claims. Accordingly, the scope of the invention should be limited only by the attached claims.

## Claims

1. A method comprising:
conveying drill cuttings into a vessel (102);
solubilizing hydrocarbons from the drill cuttings with a liquid solvent to form a miscible fluid; **characterized by**
using vapor to displace the miscible fluid from the vessel (102).

2. The method of claim 1, wherein the liquid solvent is liquid carbon dioxide.

3. The method of claim 1, wherein the displacing the miscible fluid with vapor comprises providing the vapor to the vessel (102) and displacing the miscible fluid out of a bottom of the vessel (102).

4. The method of claim 1, wherein the vapor is vapor carbon dioxide and the liquid solvent is liquid carbon dioxide, preferably further comprising heating the miscible fluid at an economizer (204) with the vapor carbon dioxide.

5. The method according to any one of the preceding claims, further comprising displacing the miscible fluid with an additional amount of the liquid solvent.

6. The method of claim 1, wherein the vapor is nitrogen, carbon dioxide, air or inert gas.

7. The method according to any one of the preceding claims, further comprising heating the miscible fluid at an economizer (910) with the vapor; preferably further comprising:
decreasing the pressure prior to the heating the miscible fluid;
vaporizing the miscible fluid to form vapor carbon dioxide; and
separating the hydrocarbons from the vapor carbon dioxide.

8. The method according to any one of the preceding claims, wherein the solubilizing and the displacing are repeated if the amount of the hydrocarbons remaining on the drill cuttings is greater than one-percent.

9. The method of claim 1, further comprising vaporizing the miscible fluid to separate the hydrocarbons from the solvent in a vapor or gas state.

10. A method according to claim 1 comprising:
conveying drill cuttings into a vessel (102);
solubilizing hydrocarbons from drill cuttings with solvent in a liquid state to form a miscible fluid;
displacing the miscible fluid from the vessel (102); and
heating the miscible fluid at an economizer (910) with the solvent in a vapor or gas state.

11. The method of claim 10, wherein the displacing the miscible fluid from the vessel (102) comprises providing the solvent in the vapor or gas state to the vessel (102) to force the miscible fluid out of the vessel (102); preferably wherein the displacing the miscible fluid comprises displacing substantially all of the miscible fluid and further comprising removing the solvent in the vapor or gas state prior to removing the cuttings from the vessel (102).

12. The method of claim 10 or 11, further comprising cooling the solvent in the vapor or gas state with the miscible fluid at the economizer (910); preferably wherein the economizer vaporizes the miscible fluid, and further comprising separating the hydrocarbons from the solvent in a vapor or gas state.

13. A method according to claim 1 comprising:
conveying drill cuttings into a vessel (102), the drill cuttings having hydrocarbons in excess of one-percent by mass;
providing liquid carbon dioxide to the vessel (102) to solubilize the hydrocarbons;
agitating the drill cuttings and liquid carbon dioxide in the vessel (102) to form a miscible fluid;
displacing the miscible fluid from the vessel (102) with vapor carbon dioxide.

14. The method of claim 13, further comprising heating the miscible fluid at an economizer (910) with the vapor carbon dioxide to vaporize the miscible fluid such that the hydrocarbons are separable from the vapor carbon dioxide; and/or
further comprising reducing an amount of the hydrocarbons in the drill cuttings to the one-percent or less prior to the displacing the miscible fluid from the vessel with the vapor carbon dioxide.

## Patentansprüche

1. Verfahren, das umfasst:
Befördern von Bohrklein in einen Behälter (102);
Löslichmachen von Kohlenwasserstoffen aus dem Bohrklein mit einem flüssigen Lösungsmittel, um ein mischbares Fluid auszubilden; **gekennzeichnet durch** Verwenden von Dampf zum Verdrängen des mischbaren Fluids aus dem Behälter (102).

2. Verfahren nach Anspruch 1, wobei das flüssige Lösungsmittel flüssiges Kohlendioxid ist.

3. Verfahren nach Anspruch 1, wobei das Verdrängen des mischbaren Fluids mit Dampf ein Bereitstellen des Dampfes an den Behälter (102) und Verdrängen des mischbaren Fluids aus einem Boden des Behälters (102) umfasst.

4. Verfahren nach Anspruch 1, wobei der Dampf dampfförmiges Kohlendioxid ist und das flüssige Lösungsmittel flüssiges Kohlendioxid ist, vorzugsweise ferner umfassend Erhitzen des mischbaren Fluids an einem Economiser (204) mit dem dampfförmigen Kohlendioxid.

5. Verfahren gemäß einem der vorhergehenden Ansprüche, ferner umfassend ein Verdrängen des mischbaren Fluids mit einer weiteren Menge des flüssigen Lösungsmittels.

6. Verfahren nach Anspruch 1, wobei der Dampf Stickstoff, Kohlendioxid, Luft oder Inertgas ist.

7. Verfahren gemäß einem der vorhergehenden Ansprüche, ferner umfassend ein Erhitzen des mischbaren Fluids an einem Economiser (910) mit dem Dampf; vorzugsweise ferner umfassend:
Verringern des Drucks vor dem Erhitzen des mischbaren Fluids;
In-Dampf-Überführen des mischbaren Fluids zum Ausbilden von dampfförmigem Kohlendioxid; und
Abtrennen der Kohlenwasserstoffe aus dem dampfförmigen Kohlendioxid.

8. Verfahren gemäß einem der vorhergehenden Ansprüche, wobei das Löslichmachen und das Verdrängen wiederholt werden, falls die am Bohrklein verbleibende Menge der Kohlenwasserstoffe größer als ein Prozent ist.

9. Verfahren nach Anspruch 1, ferner umfassend ein In-Dampf-Überführen des mischbaren Fluids zum Abtrennen der Kohlenwasserstoffe aus dem Lösungsmittel in einem Dampf- oder Gaszustand.

10. Verfahren gemäß Anspruch 1, umfassend:
Befördern von Bohrklein in einen Behälter (102);
Löslichmachen von Kohlenwasserstoffen aus Bohrklein mit einem Lösungsmittel in einem flüssigen Zustand, um ein mischbares Fluid auszubilden;
Verdrängen des mischbaren Fluids aus dem Behälter (102); und
Erhitzen des mischbaren Fluids an einem Economiser (910) mit dem Lösungsmittel in einem Dampf- oder Gaszustand.

11. Verfahren nach Anspruch 10, wobei das Verdrängen des mischbaren Fluids aus dem Behälter (102) ein Bereitstellen des Lösungsmittels im Dampf- oder Gaszustand an den Behälter (102) umfasst, um das mischbare Fluid aus dem Behälter (102) zu drängen; vorzugsweise wobei das Verdrängen des mischbaren Fluids ein Verdrängen von im Wesentlichen dem gesamten mischbaren Fluid umfasst, und ferner umfassend ein Entfernen des Lösungsmittels im Dampf- oder Gaszustand vor dem Entfernen des Bohrkleins aus dem Behälter (102).

12. Verfahren nach Anspruch 10 oder 11, ferner umfassend ein Kühlen des Lösungsmittels im Dampf- oder Gaszustand mit dem mischbaren Fluid am Economiser (910); vorzugsweise wobei der Economiser das mischbare Fluid in Dampf überführt, und ferner umfassend ein Abtrennen der Kohlenwasserstoffe aus dem Lösungsmittel in einem Dampf- oder Gaszustand.

13. Verfahren gemäß Anspruch 1, umfassend:
Befördern von Bohrklein in einen Behälter (102), wobei das Bohrklein Kohlenwasserstoffe von mehr als einem Masseprozent aufweist;
Bereitstellen von flüssigem Kohlendioxid an den Behälter (102), um die Kohlenwasserstoffe löslich zu machen;
Rühren des Bohrkleins und des flüssigen Kohlendioxids im Behälter (102), um ein mischbares Fluid auszubilden;
Verdrängen des mischbaren Fluids aus dem Behälter (102) mit dampfförmigem Kohlendioxid.

14. Verfahren nach Anspruch 13, ferner umfassend ein Erhitzen des mischbaren Fluids an einem Economiser (910) mit dem dampfförmigen Kohlendioxid, um das mischbare Fluid in Dampf zu überführen, so dass die Kohlenwasserstoffe vom dampfförmigen Kohlendioxid abtrennbar sind; und
ferner umfassend ein Reduzieren einer Menge der Kohlenwasserstoffe im Bohrklein auf das eine Prozent oder weniger vor dem Verdrängen des mischbaren Fluids aus dem Behälter mit dem dampfförmigen Kohlendioxid.

## Revendications

1. Procédé comprenant :
le transport des déblais de forage dans une cuve (102) ;
la solubilisation des hydrocarbures provenant des déblais de forage avec un solvant liquide pour former un fluide miscible ; **caractérisé par**
l'utilisation de la vapeur pour déplacer le fluide miscible depuis la cuve (102).

2. Procédé selon la revendication 1, dans lequel le solvant liquide est du dioxyde de carbone liquide.

3. Procédé selon la revendication 1, dans lequel le déplacement du fluide miscible avec la vapeur comprend la fourniture de la vapeur à la cuve (102) et le déplacement de fluide miscible hors d'un fond de la cuve (102).

4. Procédé selon la revendication 1, dans lequel la vapeur est du dioxyde de carbone vapeur et le solvant liquide est du dioxyde de carbone liquide, de préférence comprenant en outre le chauffage du fluide miscible au niveau d'un économiseur (204) avec le dioxyde de carbone vapeur.

5. Procédé selon l'une quelconque des revendications précédentes, comprenant en outre le déplacement du fluide miscible avec une quantité supplémentaire de solvant liquide.

6. Procédé selon la revendication 1, dans lequel la vapeur est de l'azote, du dioxyde de carbone, de l'air ou du gaz inerte.

7. Procédé selon l'une quelconque des revendications précédentes, comprenant en outre le chauffage du fluide miscible au niveau d'un économiseur (910) avec la vapeur, de préférence comprenant en outre :
la diminution de la pression avant le chauffage du fluide miscible ;
la vaporisation du fluide miscible pour former du dioxyde de carbone vapeur ;
la séparation des hydrocarbures du dioxyde de carbone vapeur.

8. Procédé selon l'une quelconque des revendications précédentes, dans lequel la solubilisation et le déplacement sont répétés si la quantité d'hydrocarbures restante dans les déblais de forage est supérieure à un pour cent.

9. Procédé selon la revendication 1, comprenant en outre, la vaporisation du fluide miscible pour séparer les hydrocarbures du solvant dans un état de vapeur ou de gaz.

10. Procédé selon la revendication 1, comprenant le transport des déblais de forage dans une cuve (102) ;
la solubilisation des hydrocarbures provenant des déblais de forage avec du solvant dans un état liquide pour former un fluide miscible ;
le déplacement du fluide miscible depuis la cuve (102) ; et
le chauffage du fluide miscible au niveau d'un économiseur (910) avec le solvant dans un état de vapeur ou de gaz.

11. Procédé selon la revendication 10, dans lequel le déplacement du fluide miscible depuis la cuve (102) comprend la fourniture du solvant dans l'état de vapeur ou de gaz à la cuve (102) pour forcer le fluide miscible hors de la cuve (102) ; de préférence dans lequel le déplacement du fluide miscible comprend le déplacement de la quasi-totalité du fluide miscible et comprenant en outre l'élimination du solvant dans l'état de vapeur ou de gaz avant l'élimination des déblais depuis la cuve (102).

12. Procédé selon la revendication 10 ou 11, comprenant en outre le refroidissement du solvant dans l'état de vapeur ou de gaz avec le fluide miscible au niveau de l'économiseur (910) ; de préférence dans lequel l'économiseur vaporise le fluide miscible et comprenant en outre la séparation des hydrocarbures du solvant dans un état de vapeur ou de gaz.

13. Procédé selon la revendication 1 comprenant :
le transport des déblais de forage dans une cuve (102), les déblais de forage présentant des hydrocarbures en excès d'un pour cent en masse ;
la fourniture de dioxyde de carbone liquide à la cuve (102) pour solubiliser les hydrocarbures ;
l'agitation des déblais de forage et du dioxyde de carbone liquide dans la cuve (102) pour former un fluide miscible ;
le déplacement du fluide miscible depuis la cuve (102) avec le dioxyde de carbone vapeur.

14. Procédé selon la revendication 13, comprenant en outre le chauffage du fluide miscible dans un économiseur (910) avec le dioxyde de carbone vapeur pour vaporiser le fluide miscible de sorte que les hydrocarbures sont séparables du dioxyde de carbone vapeur ; et/ou comprenant en outre la réduction d'une quantité d'hydrocarbures dans les déblais de forage à un pour cent ou moins avant le déplacement du fluide miscible depuis la cuve avec le dioxyde de carbone vapeur.
